# DEMANDE DE BREVET EUROPEEN

(11) **EP 1 310 755 A1**
(43) Date de publication de la demande: **14.05.2003**
(21) Numéro de dépôt: 02370041.2
(22) Date de dépôt: 18.10.2002
(51) Int. Cl.: F27B 9/16, F27B 9/06

(54) **Four a sole annulaire a tube foyer polygonal**

(30) Priorité: 31.10.2001 FR 0114129
(71) Demandeur: EUROFOURS, 59144 Gommegnies (FR)
(72) Inventeur: Gauthier, Gérard, 80080 Amiens (FR)
(74) Mandataire: Hennion, Jean-Claude

(57) **Abrégé**

Un four de cuisson à sole annulaire comporte :
a) un brûleur à gaz,
b) un tube foyer dans lequel est injectée la flamme du brûleur,
c) une enveloppe extérieure fermée par un fond, entourant le tube foyer et délimitant avec celui-ci une chambre annulaire de chauffage,
d) une cheminée d'évacuation débouchant dans la partie avant de la chambre annulaire de chauffage,
e) au moins une batterie de canalisations, remplies de fluide caloporteur, chaque canalisation ayant une première partie montée dans l'enceinte du four et une seconde partie annulaire montée dans la chambre de chauffage.

Selon l'invention, l'enveloppe extérieure (6) et/ou le tube foyer (5) a , en section transversale, une configuration polygonale, notamment hexagonale ou octogonale.

De préférence la partie arrière du tube foyer (5) comporte des ouvertures périphériques (21) de passage des gaz de combustion, qui sont en regard des arêtes (32) de l'enveloppe extérieure (6) de forme polygonale.

## Description

La présente invention concerne un four de cuisson dénommé à sole annulaire, en ce qu'il est équipé d'un système de chauffage qui comporte un brûleur à gaz et au moins une batterie de canalisations annulaires remplies de fluide caloporteur , les parties hautes de toutes les canalisations étant disposées dans l'enceinte du four pour constituer les soles de cuisson tandis que les parties basses de toutes les canalisations sont disposées dans une chambre annulaire de chauffage à l'intérieur de laquelle est injectée la flamme du brûleur à gaz.

Un tel four à sole annulaire est notamment connu par le document FR.2.794.850. Dans un tel four , la chambre annulaire de chauffage est constituée par une enveloppe extérieure et par un tube intérieur dit tube foyer. La flamme du brûleur est injectée dans le foyer qui est la partie intérieure avant du tube foyer. L'ensemble extérieur est fermé par un fond, tandis que le tube foyer est ouvert à sa partie arrière de telle sorte que les gaz de combustion, provenant de la flamme du brûleur, puissent pénétrer dans la chambre annulaire de chauffage depuis sa partie arrière et remonter jusqu'à la partie avant de celle-ci dans laquelle débouche une cheminée d'évacuation. C'est le passage des gaz chauds de combustion dans la chambre annulaire de chauffage qui réalise le chauffage du fluide caloporteur circulant dans les canalisations dont la partie basse est disposée dans ladite chambre.

De manière conventionnelle, l'enveloppe extérieure de forme cylindrique est obturée par un fond, tandis que le tube foyer de forme cylindrique est exempt de fond, laissant ainsi un passage périphérique annulaire pour les gaz de combustion. Selon un mode de réalisation, le tube foyer est composé de plusieurs tubes à écartement réglable permettant de faire varier la section de ce passage périphérique en vue de contrôler le débit des gaz de combustion circulant dans la chambre annulaire de chauffage.

Un tel mode de réalisation présente, selon le demandeur, plusieurs inconvénients. Le tube foyer doit être soutenu par des éléments supports placés à l'intérieur de la chambre annulaire avec une précision suffisante pour que cette chambre annulaire ait une section de passage homogène sur toute sa périphérie. De plus il a été constaté des écarts importants dans les conditions de cuisson du four dus à une hétérogénéité du débit des gaz de combustion dans la chambre annulaire de chauffage.

En effet bien que le passage annulaire des gaz de combustion soit le même sur toute la périphérie du tube foyer, le demandeur a remarqué qu'il pouvait néanmoins y avoir des différences de températures dans l'enceinte du four, qui seraient dues à une circulation différenciée des gaz de combustion dans la chambre annulaire de chauffage. On peut expliquer ce phénomène en considérant l'écoulement des gaz de combustion dans la chambre annulaire. Ces gaz proviennent du foyer qui constitue la portion interne du tube foyer, pénètrent de manière assez homogène dans la partie arrière de la chambre annulaire par le passage et circulent dans la chambre annulaire de chauffage jusqu'à la cheminée d'évacuation. Du fait que cette cheminée d'évacuation débouche à un endroit précis de la partie avant de la chambre annulaire de chauffage, il se crée une sorte d'aspiration vers la cheminée d'évacuation de sorte que l'écoulement des gaz de combustion se fait selon une direction privilégiée vers la cheminée d'évacuation, pouvant dans certaines zones prendre une direction en hélice.

Pour pallier cet inconvénient, selon l'invention, l'enveloppe extérieure (et/ou le tube foyer) a, en section transversale, une configuration polygonale.

De préférence, la partie arrière du tube foyer comporte des ouvertures périphériques de passage des gaz de combustion et s'agissant d'une enveloppe extérieure, polygonale, lesdites ouvertures de passage sont au regard de chaque arête dudit polygone. Ainsi l'écoulement des gaz de combustion se fait de manière privilégiée depuis chaque ouverture de passage selon la direction générale de chaque arête. Cette disposition structurelle revient à décomposer la chambre annulaire de chauffage en compartiments individuels , les gaz de combustion introduits par une ouverture de passage donné dans le compartiment correspondant se déplaçant dans ledit compartiment sans le quitter jusqu'à la partie avant de ladite chambre. En effet chaque compartiment est séparé de ses compartiments adjacents par un rétrécissement qui s'oppose, grâce à la perte de charge qu'il induit, au passage d'un flux de gaz de combustion d'un compartiment à l'autre.

Ce mode de réalisation de l'enveloppe extérieure de configuration polygonale présente un avantage complémentaire qui est sa facilité de fabrication par pliage.

Avantageusement la cheminée d'évacuation comporte :
a) un sas de raccordement débouchant latéralement dans l'avant de la chambre annulaire de chauffage et
b) un conduit monté, extérieurement à la chambre de chauffage, le long de l'enveloppe extérieure et débouchant d'une part dans ledit sas de raccordement et d'autre part en dehors du four.

Cette disposition particulière permet de conserver à l'intérieur du châssis du four la chaleur qui est véhiculée par les gaz de combustion en sortie du sas de raccordement. On augmente ainsi l'efficacité du chauffage.

De préférence, dans ce cas, une partie du conduit de la cheminée d'évacuation est formée par une tôle qui est directement rapportée sur l'enveloppe extérieure.

Le sas de raccordement de la cheminée d'évacuation est équipé d'une porte d'accès au conduit de cheminée. Ainsi l'utilisateur peut intervenir directement dans le conduit de cheminée, qui est disposé sensiblement horizontalement le long de l'enveloppe extérieure, notamment pour ce qui concerne l'entretien dudit conduit.

De manière classique, le conduit de la cheminée d'évacuation est équipé d'un clapet obturateur; de plus, selon l'invention, il comporte un levier de commande dudit clapet qui est accessible depuis l'avant du four.

Par ailleurs le four de l'invention peut être équipé d'une sonde de pression, pour la mesure de la pression régnant dans l'avant du foyer, et d'un automatisme de réglage du clapet d'obturation en fonction de la mesure constatée pour la pression. En fonction de la position du clapet d'obturation, on a dans le conduit de cheminée un tirage plus ou moins important qui influe sur le débit des gaz de combustion ; l'automatisme de réglage peut également être raccordé sur les moyens d'obturation des ouvertures périphériques de passage prévues dans le tube foyer.

La présente invention sera mieux comprise à la lecture de la description qui va être faite d'un exemple préféré de réalisation d'un four de cuisson à sole annulaire, illustré par le dessin annexé dans lequel :
La figure 1 est une représentation schématique en plan d'une canalisation unitaire connue pour four à sole annulaire,
La figure 2 est une représentation schématique en coupe longitudinale d'un four équipé de plusieurs batteries de canalisations unitaires selon la figure 1 et dont le tube foyer est percé d'ouvertures de passage des gaz de combustion,
La figure 3 est une représentation schématique partielle en perspective du four, notamment la chambre annulaire de chauffage et la cheminée d'évacuation,
La figure 4 est une coupe transversale schématique de la chambre annulaire de chauffage avec l'enveloppe extérieure de forme polygonale,
La figure 5 est une vue partielle d'un tube foyer, comportant des ouvertures complémentaires, équipé d'un obturateur et

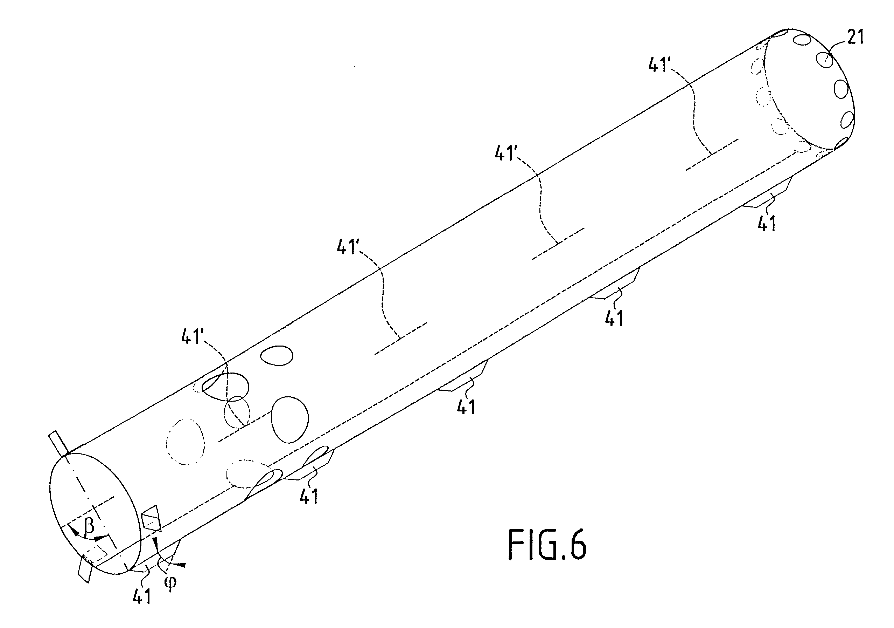

La figure 6 est une vue en perspective d'un tube foyer.

Un four 1 du type généralement dénommé à sole annulaire comporte une enceinte intérieure 2 qui est portée à température grâce à des moyens de chauffage disposés pour partie dans l'enceinte 2 et pour partie en partie basse 3 du four 1.

Ces moyens de chauffage sont constitués par des batteries de canalisations tubulaires 4, remplies d'un fluide caloporteur, et par un brûleur 18 qui est disposé face à l'évidement intérieur ou foyer 33 d'un tube foyer 5 qui est entouré d'une enveloppe extérieure 6.

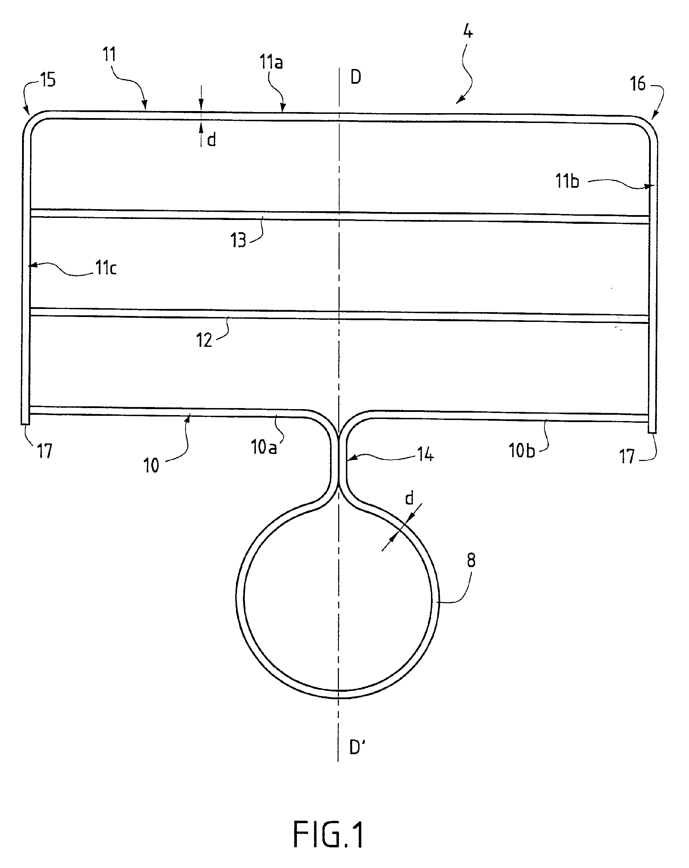

Sur la figure 1 est illustrée la structure traditionnelle d'une canalisation unitaire 4 de chauffage, symétrique par rapport au plan médian DD'. Cette canalisation 4 est destinée à équiper un four à trois dalles de cuisson. Elle est constituée de trois tronçons d'un même type de tubes 10,11,12,13 de diamètre d. Un premier tronçon 10 a été cintré de manière à former une partie annulaire 8 , deux parties rectilignes 10a, 10b et une partie intermédiaire 14, formant la liaison entre ces deux parties rectilignes 10a, 10b et la partie annulaire 8. La partie annulaire 8 est destinée à être logée à l'intérieur de la chambre annulaire de chauffage 7 comprise entre le tube foyer 5 et l'enveloppe extérieure 6. La partie intermédiaire 14 passe par une fente longitudinale 9 pratiquée dans l'enveloppe extérieure 6.

Le second tronçon de tube 11 présente deux coudes à 90° (15,16) délimitant trois parties rectilignes à savoir une partie centrale 11a destinée à venir sous le plafond du four et deux parties latérales 11b, 11c destinées à venir le long des deux parois latérales du four 1. Les troisième et quatrième tronçons de tube 12, 13 sont rectilignes. Les extrémités 17 du second tube 11 sont obturées après qu'ait été introduite dans le volume intérieur de cette canalisation 4 une quantité déterminée de fluide caloporteur, notamment liquide.

Le chauffage de l'enceinte 2 se fait par échange de chaleur entre la flamme provenant du brûleur 18 et le volume intérieur de l'enceinte 2 grâce aux canalisations 4. La chaleur émise par la flamme est communiquée aux parties annulaires 8 de toutes les canalisations principalement par convexion, grâce à la circulation des gaz de combustion dans la chambre annulaire de chauffage 7, lesdits gaz s'échappant ensuite par un conduit de cheminée débouchant sur la partie avant de la chambre 7.

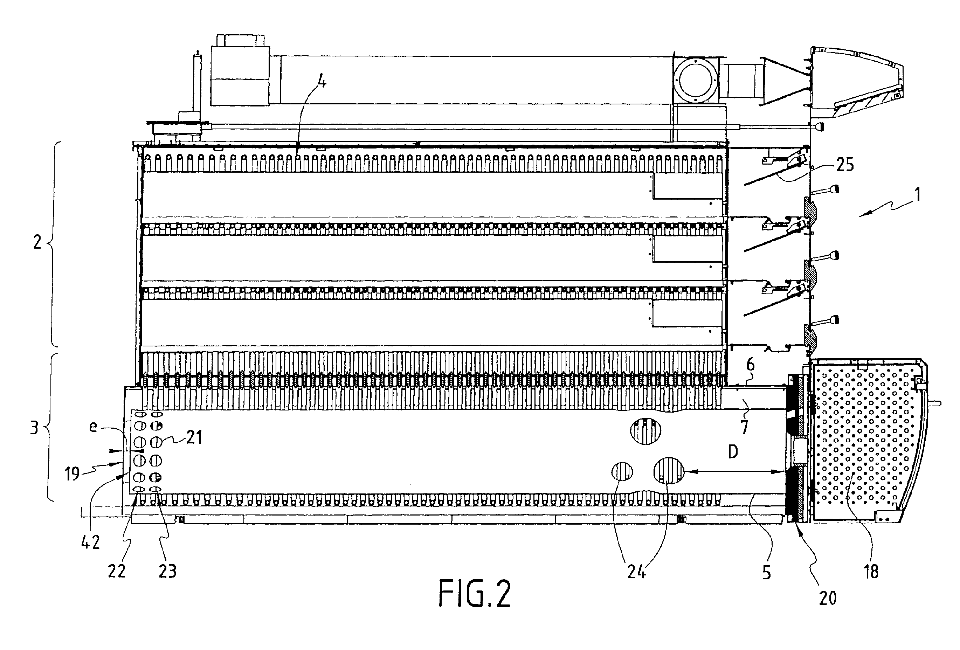

L'enveloppe extérieure 6 est obturée par un fond 19, le tube foyer 5 est dans l'exemple illustré à la figure 2 obturé par un fond 42. De plus tant le tube foyer 5 que l'enveloppe extérieure 6 sont montés en partie avant sur un même cadre 20. Ainsi le tube foyer 5, l'enveloppe extérieure 6 et le cadre avant 20 forment un ensemble monobloc. Le tube foyer 5 est percé, à proximité du fond 42 d'une pluralité d'ouvertures 21 de passage pour les gaz de combustion. Dans l'exemple illustré à la figure 2, on a représenté deux rangées 22, 23 comprenant chacune une douzaine d'ouvertures 21 disposées régulièrement sur toute la périphérie du tube foyer 5.

De plus dans une ou plusieurs zones intermédiaires du tube foyer 5 entre le fond 42 et le cadre avant 20 sont prévues des ouvertures complémentaires 24. De préférence comme illustré, ces ouvertures complémentaires 24 sont disposées au moins à une distance D du cadre avant 20 qui est supérieure à la longueur normale de la flamme sortant du brûleur 18. Il importe en effet qu'il n'y ait pas de chauffage par rayonnement direct de la flamme à travers les ouvertures 24, dans la mesure où la température de la flamme est nettement supérieure à celle des gaz de combustion, ce qui pourrait localement entraîner des différences très importantes de température du fluide caloporteur circulant dans les canalisations se trouvant en regard des ouvertures complémentaires 24. Par contre ces ouvertures complémentaires 24 sont de préférence situées vers l'avant du four, telles qu'illustrées sur la figure 2. On comprend que les gaz de combustion, lors de l'échange de chaleur avec le fluide caloporteur , se refroidissent au fur et à mesure qu'ils se déplacent à l'intérieur de la chambre annulaire de chauffage 7 depuis leur introduction à travers les ouvertures 21 à proximité du fond 42 jusqu'à la partie avant de la chambre 7. La présence des ouvertures complémentaires 24 permet de remédier à cet inconvénient en introduisant localement , de préférence vers l'avant de la chambre annulaire de chauffage 7, une certaine proportion de gaz de combustion plus chauds que ceux qui traversent la chambre 7 sur toute sa longueur. Cette présence d'ouvertures complémentaires 24 est d'autant plus importante dans le cas d'un four à sole annulaire du type de celui qui est illustré à la figure 2 dans lequel on introduit les produits à cuire par des portes basculantes frontales 25 grâce à des tapis supportant lesdits produits. L'introduction de ces tapis jusqu'au fond de l'enceinte et leur retrait par la porte frontale prennent un temps certain, ce qui occasionne nécessairement une déperdition de chaleur par l'avant du four, qui s'ajoute aux pertes par rayonnement à travers les portes basculantes frontales même fermées. Une solution traditionnelle est d'augmenter la puissance de chauffe des canalisations se trouvant vers l'avant du four de manière à compenser cette déperdition de chaleur. La solution de l'invention consiste à permettre d'introduire localement vers l'avant du four de gaz de combustion plus chauds dans la chambre annulaire de chauffage 7 au moins pendant une durée suffisante permettant de retrouver l'équilibre de température dans tout le volume intérieur de l'enceinte 2.

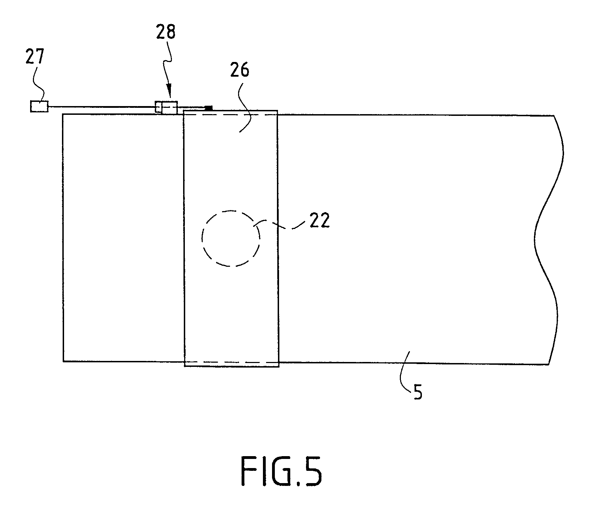

Pour permettre que cette introduction de gaz chaud par les ouvertures complémentaires 24 soit temporaire, il faut nécessairement des moyens d'obturation desdites ouvertures 24. Un exemple de tels moyens d'obturation est illustré à la figure 5. Il s'agit en l'occurrence d'une plaque cylindrique 26 qui est montée concentriquement au tube foyer 5, de manière ajustée et coulissante. L'utilisateur peut commander, depuis l'avant du four 1, le déplacement de cette plaque obturatrice 26 en actionnant une mollette 27 montée sur un système 28, par exemple à tige filetée, apte à transformer la rotation de la mollette en un déplacement longitudinal de la plaque 26. Bien sûr tout autre moyen d'obturation est envisageable pour autant qu'il puisse être actionné facilement par l'utilisateur depuis l'avant du four.

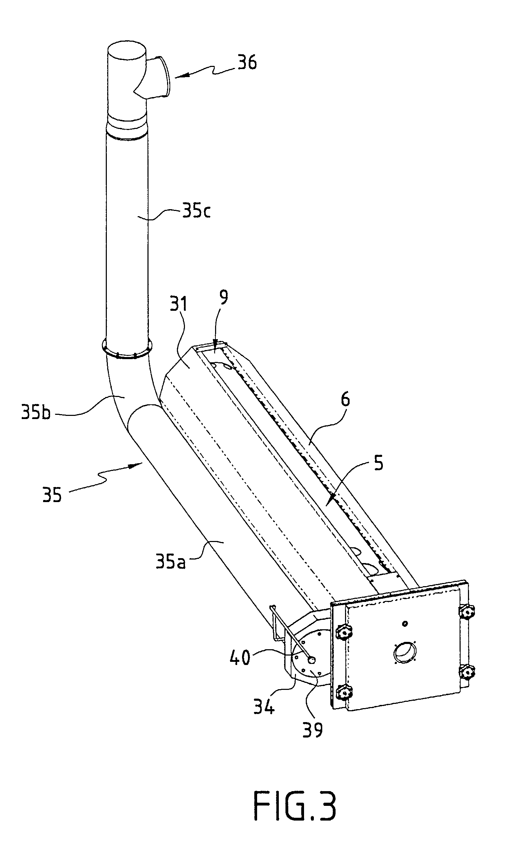

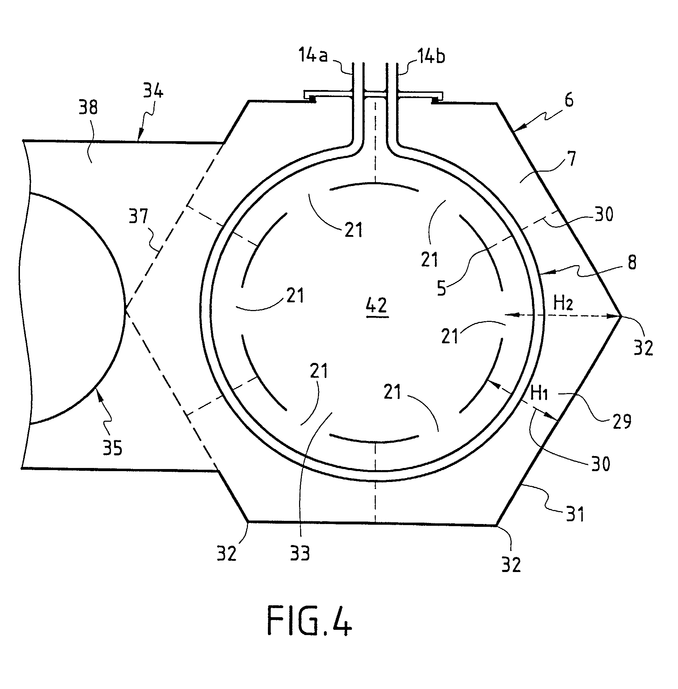

L'enveloppe extérieure 6 de la chambre annulaire de chauffage 7 a une forme polygonale. Dans l'exemple illustré sur la figure 4, il s'agit d'un hexagone, tandis que dans l'exemple illustré sur la figure 3 il s'agit d'un octogone. Le tube foyer 5 étant cylindrique, la configuration polygonale de l'enveloppe extérieure 6 conduit à la formation d'une chambre annulaire 7 de chauffage qui n'est plus strictement annulaire mais qui se présente sous la forme d'une succession de compartiments 29, chacun correspondant à un arc de cercle de 360° divisé par n, n étant le nombre de faces du polygone. Dans l'exemple illustré à la figure 4, chacun des six compartiments 29 est déterminé par les médiatrices 30 de deux faces 31 adjacentes de l'hexagone. Ainsi la hauteur H₁ du passage des gaz dans chaque compartiment est plus réduite le long des montants fictifs dudit compartiment 29 correspondant aux médiatrices 30, comparativement à celle H₂ au droit des arêtes 32 de l'hexagone.

Comme illustré sur la figure 4, il y a autant d'ouvertures 21 pratiquées dans le tube foyer 5 vers le fond 42 qu'il y a de faces (n) au polygone, chaque arête 32 se trouvant à l'aplomb d'une ouverture 21. Les gaz de combustion se déplaçant dans le foyer 33 constituant l'évidement intérieur du tube foyer 5, jusqu'au fond 42, s'échappent du foyer 33 par les ouvertures 21 et pénètrent dans chacun des compartiments virtuels 29. Ils se déplacent sur toute la longueur desdits compartiments 29 jusqu'à s'échapper par le sas de raccordement 34 de la cheminée d'évacuation 35. Les gaz de combustion qui pénètrent dans la chambre annulaire 7 par une ouverture 21 donnée se déplacent de telle sorte qu'ils rencontrent le moins possible de perte de charge. Ils ont dont tendance à se déplacer dans la zone de la chambre annulaire 7 où ils ont le plus d'espace et donc le plus de hauteur, c'est-à-dire le plus possible à proximité de l'arête 32 dans le compartiment 29. Le déplacement en question va donc suivre la direction longitudinale de la chambre annulaire 7, les gaz circulant dans un compartiment 29 donné n'ayant pas tendance à venir occuper le compartiment qui lui est adjacent dans la mesure où pour passer dans cet autre compartiment il leur faut franchir un espace de hauteur H₁ réduite, ce qui occasionnerait une augmentation de perte de charge. Ainsi la forme polygonale de l'enveloppe extérieure 6 permet d'éviter d'infléchir la direction de circulation des gaz de combustion vers la zone de la chambre 7 dans laquelle débouche le sas de raccordement 34 de la cheminée d'évacuation 35, qui réalise le tirage des gaz de combustion. Cette disposition particulière permet donc d'améliorer l'homogénéité du chauffage du four.

D'autres variantes de réalisation pourraient permettre d'obtenir un effet technique similaire. Ce pourrait être le tube foyer 5 qui présenterait une configuration polygonale, aux lieu et place de l'enveloppe extérieure 6. On pourrait également imaginer qu'à la fois le tube foyer 5 et l'enveloppe extérieure 6 aient une configuration polygonale, les arêtes étant angulairement décalées, ce qui accentuerait encore plus la différence de hauteur entre les montants extérieurs virtuels de chaque compartiment par rapport à la hauteur dans la zone médiane du compartiment.

La configuration de l'enveloppe extérieure 6 et/ou du tube foyer 5 permet de réaliser lesdits éléments par un simple pliage, ce qui facilite leur fabrication.

La cheminée d'évacuation 35 comprend un sas de raccordement 34 qui débouche latéralement dans l'avant de la chambre annulaire de chauffage 7 et un conduit 35a qui, au moins partiellement, est monté à l'intérieur de la structure isolée du four 1 le long de l'enveloppe extérieure 6. Ce conduit 35a débouche d'une part dans le sas de raccordement 34 et d'autre part en dehors du four 1. Un tel mode de réalisation est illustré à la figure 3. On n'a pas représenté sur cette figure la structure extérieure du four qui est tapissée de matière isolante et qui recouvre la partie avant 35a du conduit 35 de cheminée , dans la portion rectiligne sensiblement horizontale où le conduit 35 est appliqué le long de l'enveloppe extérieure 6. Au-delà de cette partie avant 35a, le conduit 35 forme un coude 35b qui est prolongé par une portion verticale 35c avec une ouverture d'échappement 36, à l'air libre.

Le sas de raccordement 34 débouche dans la partie avant de la chambre annulaire 7 par une ouverture 37, visible sur la figure 4. Il comporte une chambre intérieure 38 de faible largeur, dans laquelle débouche le conduit de cheminée 35, dont la direction générale est celle de la chambre annulaire 7.

Même s'il y a une certaine baisse de la température des gaz de combustion due à l'échange de chaleur, il n'empêche que les gaz de combustion sortant de la chambre annulaire 7 sont encore relativement chauds. La disposition particulière de l'invention selon laquelle au moins une partie du conduit 35a de la cheminée d'évacuation 35 est intégrée dans la structure isolée du four et placée le long de l'enveloppe extérieure 6 permet d'accroître le rendement thermique du four.

Dans l'exemple de réalisation illustré aux figures 3 et 4, le conduit 35 est cylindrique. Il ne peut donc pas y avoir un contact étroit entre ledit conduit 35 et l'enveloppe extérieure 6. Pour améliorer encore le rendement thermique du four, il serait possible de constituer la portion 35a du conduit, intégrée dans la structure isolée du four en lui donnant une autre configuration dans laquelle il y aurait un contact surfacique plus important entre le gaz de combustion présent dans le conduit 35 et l'enveloppe extérieure 6. Ceci pourrait être obtenu en formant cette partie 35a du conduit 35 par une tôle rapportée sur l'enveloppe extérieure 6.

Le sas de raccordement 34 est équipé d'une porte d'accès 39, qui permet à l'utilisateur d'avoir un accès direct, par l'avant du four, au conduit 35 de cheminée. Ceci peut être utile en particulier pour l'entretien et le nettoyage du conduit.

De plus ce conduit 35 est équipé d'un clapet d'obturation commandé par un levier 40 lui-même accessible par l'installateur depuis l'avant du four. Ceci permet à l'installateur d'effectuer manuellement le réglage du tirage de la cheminée, qui influe naturellement sur le débit des gaz de combustion. Ce réglage est nécessaire en fonction d'un certain nombre de paramètres propres à l'utilisation du four mais également de paramètres extérieurs tels que le vent ou les températures intérieure et extérieure au local dans lequel se trouve le four.

Il est possible d'équiper le four, selon l'invention, d'une sonde de pression, destinée à mesurer la pression régnant dans la chambre de combustion c'est-à-dire dans la partie avant du foyer, là où est injectée la flamme du brûleur. Sachant qu'il faut une légère surpression dans cette chambre de combustion, il est possible à l'installateur de régler manuellement le clapet d'obturation de la cheminée d'évacuation pour obtenir ou maintenir cette surpression. Il est également possible d'asservir cette sonde de pression à un automatisme de réglage de l'ouverture du clapet d'obturation.

Lors de la fabrication du four 1, le tube foyer 5 est introduit après l'installation de toutes les batteries de canalisations. En pratique, compte-tenu de la longueur du four, le tube foyer est équipé de plusieurs pieds supports 41 destinés à prendre appui sur la portion annulaire 8 de plusieurs canalisations 4.

La hauteur de ces pieds permet de régler le centrage du tube foyer 5.

Conventionnellement le tube foyer comportait trois ensembles de pieds supports, chaque ensemble étant disposé sur la périphérie extérieure du tube foyer avec un décalage angulaire de 120°, chaque ensemble pouvant être constitué éventuellement d'un pied unique faisant toute la longueur du tube foyer. Ainsi du fait de la répartition homogène des trois ensembles venant en appui sur les batteries de canalisation, le positionnement du tube foyer pouvait être relativement imprécis.

Dans le cas présent, les pieds supports sont constitués uniquement de deux ensembles de pieds unitaires 41, 41' de petites dimensions.

Chaque pied unitaire est destiné à s'appliquer sur quelques canalisations unitaires. Chaque ensemble de pieds unitaires est disposé selon une même génératrice du tube foyer 5. Plus précisément chaque pied unitaire est disposé radialement par rapport au tube foyer 5, les deux ensembles 41,41' étant décalés d'un angle β d'environ 90 à 100° pour une bonne stabilité.

Du fait que le tube foyer 5 va être fixé en partie avant sur un cadre 20, son positionnement peut être réalisé de manière précise, ne nécessitant alors que deux lignes d'appui contre les batteries de canalisation, les deux lignes d'appui et donc les deux ensembles de pieds unitaires étant montés symétriquement par rapport au plan médian du foyer 33.

La petite dimension des pieds unitaires 41,41' a pour fonction de limiter les contraintes mécaniques qui sont dues aux écarts très important de température qui existent entre la partie du pied qui est en contact avec le tube foyer et la partie du pied qui est en contact avec les batteries de canalisations, sachant que la température intérieure du foyer 33 est de l'ordre de 500 à 600°C alors que la température intérieure de la chambre annulaire 7 est de l'ordre de 200 à 300°C. Ces écarts de températures entre les deux parties extrêmes de chaque pied entraînent des contraintes mécaniques importantes, qu'on limite en diminuant la dimension de chaque pied.

De plus pour faciliter l'introduction du tube foyer, chaque pied 41,41' support a sa face avant , dans le sens de l'introduction, voire également sa face arrière qui est inclinée, avec un angle ϕ qui est de préférence inférieur à 30°, pour éviter que le pied vienne en butée contre une canalisation 4 qui serait légèrement décalée en hauteur par rapport à la canalisation 4 adjacente.

Dans l'exemple illustré et décrit ci-dessus, le tube foyer 5 était fermé par un fond 42. L'espace disponible entre ce fond 42 et le fond 19 de l'enveloppe extérieure 6 ne se justifie que pour permettre la dilatation du tube foyer 5 sous l'effet de la température des gaz de combustion, dilatation qui généralement sera supérieure à celle de l'enveloppe 6 puisque celle-ci est portée à une température nettement inférieure à celle du tube foyer 5. On a intérêt à réduire cet espace puisqu'il augmente inutilement l'encombrement du four ainsi que la quantité de matière première utilisée pour la réalisation de l'enveloppe extérieure 6. De préférence cet espace est de largeur e, réduite de l'ordre de 10 à 20mm.

Lorsque cet espace e est de dimension réduite, il est possible de ne pas fermer le tube foyer 5 par un fond puisque, dans ce cas, et malgré la présence de ce passage périphérique disponible pour les gaz de combustion, ceux-ci passeront néanmoins pour leur plus grande partie par les ouvertures 21 pratiquées sur la périphérie de la partie arrière du tube foyer 5. Les variations éventuelles de ce passage périphérique dues aux phénomènes de dilatation auront alors une incidence très faible par rapport au débit des gaz de combustion entre le foyer 33 et la chambre annulaire 7.

## Revendications

1. Four de cuisson à sole annulaire comportant :
a) un brûleur à gaz,
b) un tube foyer dans lequel est injectée la flamme du brûleur,
c) une enveloppe extérieure fermée par un fond, entourant le tube foyer et délimitant avec celui-ci une chambre annulaire de chauffage,
d) une cheminée d'évacuation débouchant dans la partie avant de la chambre annulaire de chauffage,
e) au moins une batterie de canalisations, remplies de fluide caloporteur, chaque canalisation ayant une première partie montée dans l'enceinte du four et une seconde partie annulaire montée dans la chambre de chauffage,
**caractérisé en ce que** l'enveloppe extérieure (6) et/ou le tube foyer (5) a, en section transversale, une configuration polygonale, notamment hexagonale ou octogonale.

2. Four selon la revendication 1 **caractérisé en ce que** la partie arrière du tube foyer (5) comporte des ouvertures périphériques (21) de passage des gaz de combustion.

3. Four selon la revendication 2 **caractérisé en ce que** les ouvertures de passage pratiquées dans la partie arrière du tube foyer sont au regard des arêtes de l'enveloppe extérieure de forme polygonale.

4. Four selon l'une des revendications 1 à 3 **caractérisé en ce que** la cheminée d'évacuation comporte :
a) un sas de raccordement (34) débouchant latéralement dans l'avant de la chambre annulaire de chauffage (7) et
b) un conduit (35a) monté, extérieurement à la chambre de chauffage (7), le long de l'enveloppe extérieure (6) et débouchant d'une part dans ledit sas de raccordement (34) et d'autre part en dehors du four (1).

5. Four selon la revendication 4 **caractérisé en ce que** le conduit (35a) de la cheminée d'évacuation est formée par une tôle qui est directement rapportée sur l'enveloppe extérieure (6).

6. Four selon l'une des revendications 4 ou 5 **caractérisé en ce que** le sas de raccordement (34) de la cheminée d'évacuation est équipé d'une porte d'accès (39) au conduit de cheminée.

7. Four selon la revendication 6 **caractérisé en ce que** le conduit (35a) de la cheminée d'évacuation étant équipé d'un clapet obturateur, il comporte un levier de commande (40) dudit clapet qui est accessible depuis l'avant du four.

8. Four selon la revendication 7 **caractérisé en ce qu'**il est équipé d'une sonde de pression, pour la mesure de la pression régnant dans l'avant du foyer, et d'un automatisme de réglage du clapet d'obturation en fonction de la mesure constatée pour la pression.

9. Four selon les revendications 2 et 8 **caractérisé en ce que** l'automatisme de réglage est raccordé sur des moyens d'obturation des ouvertures de passage (21, 24) prévues dans le tube foyer (5).
